# EUROPÄISCHE PATENTANMELDUNG

(11) **EP 0 824 287 A1**
(43) Veröffentlichungstag der Anmeldung: **18.02.1998**
(21) Anmeldenummer: 97113664.3
(22) Anmeldetag: 07.08.1997
(51) Int. Cl.: H02K 9/197, H02K 9/19, H02K 9/193

(54) **Elektrische Maschine mit einem flüssigkeitsgekühlten Innenläufer**

(30) Priorität: 12.08.1996 DE 19632479
(71) Anmelder: SIEMENS AKTIENGESELLSCHAFT, 80333 München (DE)
(72) Erfinder: Sopp, Helmut, 97650 Fladungen (DE)

(57) **Zusammenfassung**

Die Erfindung betrifft eine elektrische Maschine mit einem flüssigkeitsgekühlten Innenläufer. Durch die Kühlflüssigkeit an den Blechlamellen des Läuferblechpaketes hervorgerufene Korrossionsschäden lassen sich dadurch vermeiden, daß die Welle (4) des Läufers (3) eine Sacklochbohrung (5) aufweist, in die ein mit der Welle (4) mitrotierendes, an seinen beiden Enden offenes Hohlrohr (7) eingesetzt ist, wobei zwischen der Wandung der Sacklochbohrung (5) und der Außenwand des Hohlrohres (7) mindestens ein Strömungsspalt (8) besteht, daß ferner das mit der Sacklochbohrung (5) versehene Ende der Welle (4) in einen am Gehäuse der Maschine angebauten Sammelraum mündet, und das Hohlrohr (7) an seinem der Sacklochbohrung (5) benachbarten Ende mit einer die Flüssigkeitszufuhr oder -abfuhr ermöglichenden Einrichtung in Strömungsverbindung steht.

## Beschreibung

Die Erfindung betrifft eine elektrische Maschine mit einem flüssigkeitsgekühlten Innenläufer.

Eine solche Maschine ist durch das DE-U-1 961 596 bekannt. Bei dieser bekannten Maschine sind zur Verbesserung der Wärmeabführung aus dem Läufer in den Läuferzähnen Längskanäle vorgsehen, durch die die Kühlflüssigkeit hindurchgeführt wird. Weist der Läufer ein aus einer Vielzahl von Blechlamellen bestehendes Blechpaket auf, dann besteht bei dieser Art der Flüssigkeitskühlung die Gefahr, daß Kühlflüssigkeit zwischen die einzelnen Blechlamellen eindringt und eine Korrossion der Blechlamellen verursacht. Um dies zu verhindern, müßten die Längskanäle entsprechend abgedichtet werden, was einen sehr hohen Aufwand erfordern würde.

Der Erfindung liegt die Aufgabe zugrunde, eine elektrische Maschine mit einem flüssigkeitsgekühlten Innenläufer so auszubilden, daß durch die Kühlflüssigkeit keine Schäden an den Blechlamellen des Läuferblechpaketes hervorgerufen werden können.

Die Lösung der gestellten Aufgabe gelingt nach der Erfindung dadurch, daß die Welle des Läufers eine Sachlochbohrung aufweist, in die ein mit der Welle mitrotierendes, an seinen beiden Enden offenes Hohlrohr eingesetzt ist, wobei zwischen der Wandung der Sacklochbohrung und der Außenwand des Hohlrohres mindestens ein Strömungsspalt besteht, daß ferner das mit der Sacklochbohrung versehene Ende der Welle in einen am Gehäuse der Maschine angebauten Sammelraum mündet und das Hohlrohr an seinem der Sacklochbohrung benachbarten Ende mit einer die Flüssigkeitszufuhr oder - abfuhr ermöglichenden Einrichtung in Strömungsverbindung steht.

Bei dieser Art der Flüssigkeitskühlung wird ein direkter Kontakt der Kühlflüssigkeit mit dem Blechpaket vermieden, so daß auch keine Schädigung der Blechlamellen durch die Kühlflüssigkeit erfolgen kann. Außerdem läßt sich eine solche Flüssigkeitskühlung insbesondere auch bei Maschinen kleinerer Leistung verwirklichen. Die Läuferwelle und das Hohlrohr können gegebenenfalls aus korrossionsbeständigem Material hergestellt werden, so daß eine Schädigung dieser Teile nicht eintritt.

Vorteilhaft ist es, daß das Hohlrohr eine eckige Außenkontur aufweist, deren Umfangskreis in seinem Durchmesser dem Durchmesser der Sackbohrung entspricht. Hierdurch ergeben sich zwangsläufig Strömungsspalte zwischen dem Innenumfang der Sacklochbohrung und dem Außenumfang des Hohlrohres.

Die Flüssigkeitszufuhr bzw. -abfuhr zu bzw. von dem Hohlrohr erfolgt zweckmäßigerweise mittels eines an dem der Sacklochbohrung benachbarten Ende des Hohlrohres angeordneten Drehverteiler. Solche Drehverteiler sind handelsübliche Bauteile, so daß für die Flüssigkeitszufuhr und -abfuhr kein wesentlicher Aufwand erforderlich ist.

Eine weitere Möglichkeit der Flüssigkeitszufuhr und -abfuhr besteht darin, daß das Hohlrohr durch den Sammelraum axial hindurch geführt ist und in einen weiteren Sammelraum mündet.

Eine optimale Kühlung des Läufers wird dadurch erreicht, daß sich die Sacklochbohrung mindestens über die volle axiale Länge des auf der Welle angeordneten Läuferblechpaketes erstreckt.

Anhand eines in der Zeichnung dargestellten Ausführungsbeispieles wird die Erfindung nachfolgend näher beschrieben. Es zeigt:
- FIG 1: eine elektrische Maschine im Längsschnitt
- FIG 2: eine weitere Ausführungsvariante einer elektrischen Maschine ebenfalls im Längsschnitt und
- FIG 3: die Welle des Läufers der Maschine im Schnitt entlang der Linie III-III in FIG 1.

Mit 1 ist eine elektrische Maschine bezeichnet, die einen Ständer 2 aufweist, in dessen Ständerbohrung ein Innenläufer 3 angeordnet ist. Der Innenläufer 3 ist mit seiner Läuferwelle 4 mittels entsprechender Lager in zu beiden Seiten des Ständers 2 angeordneten Lagerschilden drehbar gelagert.

Die Läuferwelle 4 ist mit einer Sacklochbohrung 5 versehen, die sich zu ihrer geschlossenen Seite hin über die volle axiale Länge des Läuferblechpaketes 6 erstreckt. In die Sacklochbohrung 5 ist ein Hohlrohr 7 eingesetzt. Das Hohlrohr 7 weist eine eckige Außenkontur auf. Gemäß der Darstellung in FIG 3 besitzt das Hohlrohr 7 einen quadratischen Querschnitt, wobei die Ecken des Quadrates abgerundet sind. Der Durchmesser des Umfangkreises des quadratischen Hohlrohres 7 entspricht dem Durchmesser der Sacklochbohrung 5, so daß das Hohlrohr 7 in die Sacklochbohrung 5 eingesteckt werden kann. Mit seinen abgerundeten Ecken liegt das Hohlrohr 7 an der Wandung der Sacklochbohrung 5 an und wird somit in dieser gehalten. Der Durchmesser des Umfangkreises des Hohlrohres 7 kann zweckmäßigerweise etwas größer als der Durchmesser der Sacklochbohrung 5 bemessen werden, so daß sich ein leichter Festsitz des Hohlrohres 7 in der Sacklochbohrung 5 ergibt und das Hohlrohr 7 somit in Drehrichtung von der Läuferwelle 4 mitgenommen wird.

Infolge der eckigen Außenkontur des Hohlrohres 7 ergeben sich zwangsläufig zwischen dessen Außenseite und der Innenwandung der Sacklochbohrung 5 Strömungsspalte 8.

Die Läuferwelle 4 ist auf der der Antriebsseite der Maschine gegenüberliegenden Seite bis zu einem stirnseitig an dem betreffenden Lagerschild angebauten flüssigkeitsdichten Sammelraum 9 verlängert und endet in diesem Sammelraum 9. Die Öffnung 10 der Sacklochbohrung 5 mündet somit in diesen Sammelraum 9.

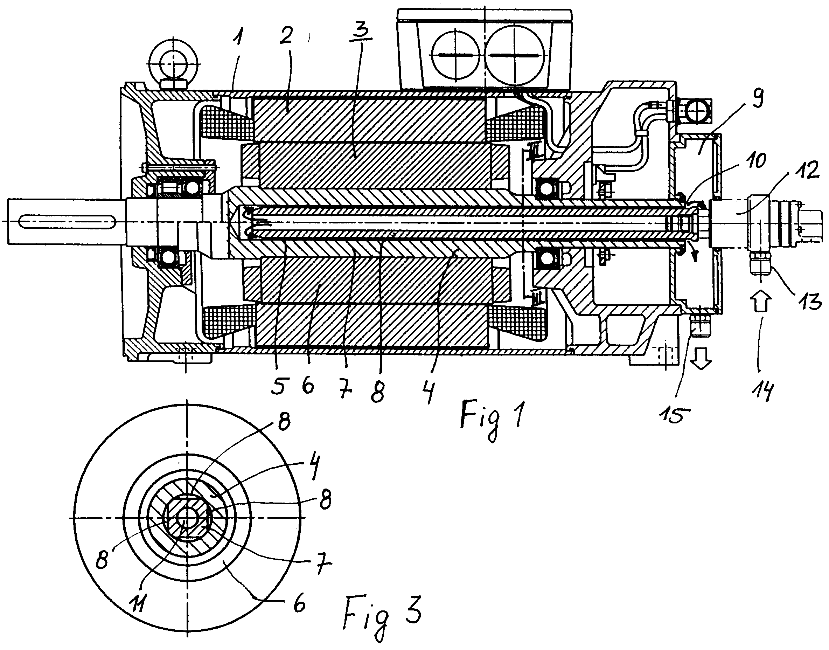

Bei dem Ausführungsbeispiel nach FIG 1 ist an dem der Öffnung 10 der Sacklochbohrung 5 benachbarten Ende des Hohlrohres 7 an dessen Bohrung 11 ein sogenannter Drehverteiler 12 angeschlossen. Mittels eines solchen Drehverteilers 12 kann über einen festen Leitungsanschluß 13 Kühlflüssigkeit in das rotierende Hohlrohr 7 eingespeist oder von diesem abgeführt werden. Wie durch einen Pfeil 14 angedeutet, wird die Kühlflüssigkeit über den Drehverteiler 12 am einen Ende des Hohlrohres 7 in dessen Bohrung 11 eingespeist und strömt an deren anderen Ende in die Sacklochbohrung 5 aus. Über die Strömungsspalten 8 strömt die Kühlflüssigkeit wieder zurück und tritt über die Öffnung 10 der Sacklochbohrung 5 in den Sammelraum 9 aus. Aus dem Sammelraum 9 kann die Kühlflüssigkeit mittels eines entsprechenden Auslaßstutzen 15 abgeführt werden.

Beim Durchströmen der Strömungsspalten 8 nimmt die Kühlflüssigkeit Wärme von der durch das Läuferblechpaket 6 erwärmten Läuferwelle 4 auf. Infolge dieser Wärmeabfuhr erfährt das Läuferblechpaket 6 und die an ihm vorgesehene Läuferwicklung bzw. der Läuferkäfig im Falle einer als Asynchronmaschine ausgebildeten elektrischen Maschine eine ausreichende Kühlung. Die Kühlung über die Läuferwelle 4 bietet den weiteren Vorteil, daß die zur Lagerung der Läuferwelle 4 dienenden Lager relativ kühl bleiben, wodurch die Standzeit des Lagerschmiermittels wesentlich erhöht wird.

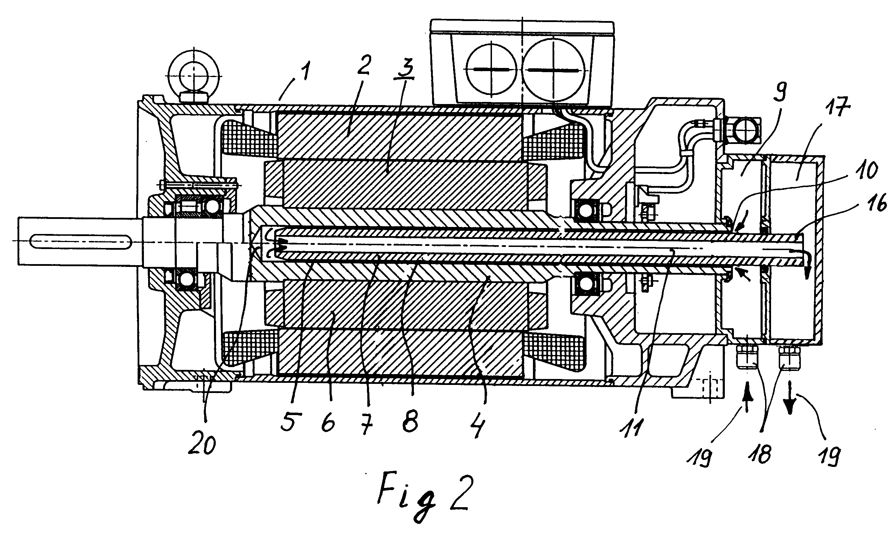

Bei dem weiteren Ausführungsbeispiel nach FIG 2 ist das Hohlrohr 7 auf der der Sacklochbohrung 5 der Läuferwelle 4 benachbarten Seite axial durch den Sammelraum 9 hindurchgeführt und ragt mit seinem betreffenden Ende 16 in einen weiteren Sammelraum 17, so daß die Bohrung 11 des Hohlrohres 7 in diesen weiteren Sammelraum 17 mündet. Die beiden Sammelräume 9 und 17 sind mit Anschlußelementen 18 versehen, über die die Kühlflüssigkeit in den jeweiligen Sammelraum 9 bzw. 17 eingebracht oder aus diesem abgeführt werden kann. Bei der Darstellung nach FIG 2 wurde davon ausgegangen, daß die Kühlflüssigkeit, wie durch einen Pfeil 19 angedeutet, in den Sammelraum 9 eingeführt wird. Von diesem Sammelraum 9 strömt die Kühlflüssigkeit in die Öffnung 10 der Sacklochbohrung 5 ein, und durch die Strömungsspalten 8 bis zum Boden 20 der Sacklochbohrung 5. Von hier aus strömt die Kühlflüssigkeit über die Bohrung 11 des Hohlrohres 7 in den weiteren Sammelraum 17 zurück, aus dem sie über das entsprechende Anschlußelement 18 abgeführt werden kann. Bei dieser Ausführungsvariante der elektrischen Maschine wird für die Zu- bzw. Abführung der Kühlflüssigkeit kein mit bewegten Teilen versehenes und somit dem Verschleiß unterworfenes Bauteil benötigt.

Bei den beiden in FIG 1 und 2 dargestellten Ausführungsbeispielen einer elektrischen Maschine gemäß der Erfindung kann die Strömungsrichtung der Kühlflüssigkeit jeweils auch umgekehrt werden. D.h. bei der Darstellung gemäß FIG 1 kann die Kühlflüssigkeit über den Sammelraum 9 zugeführt, und über den Drehverteiler 12 abgeführt werden. Desgleichen ist bei dem Ausführungsbeispiel nach FIG 2 eine Zuführung der Kühlflüssigkeit über den weiteren Sammelraum 17 und die Abführung derselben über den Sammelraum 9 möglich.

## Patentansprüche

1. Elektrische Maschine mit einem flüssigkeitsgekühlten Innenläufer, **dadurch gekennzeichnet,** daß die Welle (4) des Läufers (3) eine Sacklochbohrung (5) aufweist, in die ein mit der Welle (4) mitrotierendes, an seinen beiden Enden offenes Hohlrohr (7) eingesetzt ist, wobei zwischen der Wandung der Sacklochbohrung (5) und der Außenwand des Hohlrohres (7) mindestens ein Strömungsspalt (8) besteht, daß ferner das mit der Sacklochbohrung (5) versehene Ende der Welle (4) in einen am Gehäuse der Maschine angebauten Sammelraum (9) mündet und das Hohlrohr (7) an seinem der Sacklochbohrung (5) benachbarten Ende mit einer die Flüssigkeitszufuhr oder - abfuhr ermöglichenden Einrichtung in Strömungsverbindung steht.

2. Elektrische Maschine nach Anspruch 1, **dadurch gekennzeichnet,** daß das Hohlrohr (7) eine eckige Außenkontur aufweist, deren Umfangskreis in seinem Durchmesser dem Durchmesser der Sacklochbohrung (5) entspricht.

3. Elektrische Maschine nach Anspruch 1 oder 2, **dadurch gekennzeichnet,** daß an dem der Sacklochbohrung (5) benachbarten Ende des Hohlrohres (7) eine die Flüssigkeitszufuhr bzw. -abfuhr ermöglichender Drehverteiler angeordnet ist.

4. Elektrische Maschine nach Anspruch 1 oder 2, **dadurch gekennzeichnet,** daß das Hohlrohr (7) durch den Sammelraum (9) axial hindurchgeführt ist und in einen weiteren Sammelraum (17) mündet.

5. Elektrische Maschine nach einem der vorhergehenden Ansprüche, **dadurch gekennzeichnet,** daß sich die Sacklochbohrung (5) mindestens über die volle axiale Länge des auf der Welle (4) angeordneten Läuferblechpaketes (6) erstreckt.
